# EUROPEAN PATENT APPLICATION

(11) **EP 3 174 273 A1**
(43) Date of publication of application: **31.05.2017**
(21) Application number: 16185718.0
(22) Date of filing: 25.08.2016
(51) Int. Cl.: H04N 1/00, G06F 3/12, G06K 15/00, H04N 1/32, H04N 1/44

(54) **PRINT RESERVATION OF PRIVATE PRINT JOBS**

(30) Priority: 30.11.2015 US 201514953706
(71) Applicant: Kabushiki Kaisha Toshiba, Tokyo 105-8001 (JP); Toshiba TEC Kabushiki Kaisha, Tokyo 141-0032 (JP)
(72) Inventor: SASAMA, Kazuo, Mishima-shi, Shizuoka 411-8520 (JP)
(74) Representative: Takeuchi, Maya

(57) **Abstract**

In accordance with an embodiment, an image forming apparatus comprises a communication section, an operation input section and a control section. The communication section receives print data from an external device. The operation input section receives a print execution instruction indicating an instruction on the execution of the printing of the print data and a print execution reservation instruction indicating an instruction on a reservation of the print execution. The control section registers the print execution reservation instruction received by the operation input section if a print job is being executed and the number of the print execution reservation instructions subjected to reservation registration is smaller than given value, and starts executing a print operation corresponding to the print execution reservation instruction received by the operation input section in a case of the presence of the print execution reservation instruction subjected to reservation registration after a print job is completed.

## Description

### FIELD

Embodiments described herein relate generally to an image forming apparatus, an image forming system comprising corresponding means, an image forming method and a non-transient recording medium for storing an image forming method.

### BACKGROUND

A conventional image forming apparatus such as a digital MFP (Multifunction Peripheral) includes a network printing function. A private print is one of the functions realized by the network print function. In the private print, an image forming apparatus temporarily stores an image or a file sent from a terminal device to the image forming apparatus. Moreover, a user instructs the image forming apparatus to execute a print job through an operation section of the image forming apparatus at any timing. At this time, the image forming apparatus executes a print job. To instruct the image forming apparatus to execute a print job, the user moves to be in front of the image forming apparatus. Thus, the private print reduces the risk that the printed result is seen by other people.

However, the conventional private print has the following problems: a user can only instruct the image forming apparatus to execute a print job at the timing when no other users are executing a print job. Thus, the user has to wait if another user is executing a print job. The user may temporarily leave the image forming apparatus during this waiting period. The print job of the another user may be completed during a period when the user leaves the image forming apparatus and yet again another user may execute a print job before the user returns to the front of image forming apparatus. Consequentially, the user has to wait for a longer time. Thus, in the conventional private print, there is a problem that a user waits for a long time to execute a print job.

The problem the present invention aims to solve is to provide an image forming apparatus, a system, an image forming method and a non-transient recording medium for storing an image forming program which are capable of shortening the time a user waits to execute a print job.

To the above end, there is provided an image forming apparatus, comprising:
a communication section configured to receive print data from an external device;
an operation input section configured to receive a print execution instruction which represents an instruction on the execution of the printing of the print data and a print execution reservation instruction which represents an instruction on the reservation of the print execution; and
a control section configured to start executing a print operation corresponding to the print execution instruction if no print jobs are being executed, preregister the print execution reservation instruction received by the operation input section if a print job is being executed and the number of the print execution reservation instructions subjected to reservation registration is smaller than a given value, and start executing a print operation corresponding to the print execution reservation instruction received by the operation input section in the case of the presence of the print execution reservation instruction subjected to reservation registration after a print job is completed.

Preferably, the communication section receives the print execution reservation instruction from the external device.

Preferably still, in the case where the number of the print execution reservation instruction subjected to reservation registration reaches the given value when the print execution reservation instruction is received from the external device, the communication section sends the external device a notice indicating that the print execution reservation instruction received from the external device cannot be accepted.

Preferably yet, the operation input section comprises a 'reservation' key for receiving the print execution reservation instruction, wherein the 'reservation' key receives the print execution reservation instruction when the number of the print execution reservation instruction subjected to reservation registration is smaller than the given value.

Suitably, the operation input section comprises an 'execution' key for receiving the print execution instruction, wherein the 'execution' key receiving the print execution instruction when the control section is not executing a print job.

Suitably still, the image forming apparatus further comprises:
an authentication section configured to authenticate a user who inputs the print execution instruction and the print execution reservation instruction.

Suitably still, the further comprises:
a storage section configured to store a print execution management table for managing the print execution instruction and the print execution reservation instruction.

Suitably yet, the given number is 1.

The invention also relates to an image forming method, comprising:
receiving print data from an external device;
receiving a print execution instruction indicating an instruction on the execution of the printing of the print data and a print execution reservation instruction indicating an instruction on reservation of the print execution; and
starting executing the print operation corresponding to the print execution instruction when no print jobs are being executed, registering the print execution reservation instruction received if a print job is being executed and the number of the print execution reservation instructions subjected to reservation registration is smaller than a given value, and starting executing the print operation corresponding to the print execution reservation instruction received in a case of the presence of the print execution reservation instruction subjected to reservation registration after a print job is completed.

The invention further relates to a non-transient recording medium for storing an image forming program, including
receiving print data from an external device;
receiving a print execution instruction indicating an instruction on the execution of the printing of the print data and a print execution reservation instruction indicating an instruction on reservation of the print execution; and
starting executing the print operation corresponding to the print execution instruction if no print jobs are being executed, registering the print execution reservation instruction received if a print job is being executed and the number of the print execution reservation instructions subjected to reservation registration is smaller than a given value, and starting executing the print operation corresponding to the print execution reservation instruction received in a case of the presence of the print execution reservation instruction subjected to reservation registration after a print job is completed.

The invention also concerns an image forming system, comprising:
a communication means configured to receive print data from an external device;
an operation input means configured to receive a print execution instruction which represents an instruction on the execution of the printing of the print data and a print execution reservation instruction which represents an instruction on the reservation of the print execution; and
a control means configured to start executing a print operation corresponding to the print execution instruction if no print jobs are being executed, preregister the print execution reservation instruction received by the operation input means if a print job is being executed and the number of the print execution reservation instructions subjected to reservation registration is smaller than a given value, and start executing a print operation corresponding to the print execution reservation instruction received by the operation input means in the case of the presence of the print execution reservation instruction subjected to reservation registration after a print job is completed.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a schematic diagram exemplifying the structure of an image forming system according to an embodiment;
Fig. 2 is a block diagram exemplifying the structure of the image forming apparatus according to the embodiment;
Fig. 3 is a diagram exemplifying the structure of a print execution management table according to the embodiment;
Fig. 4 is a diagram exemplifying the structure of a print data list according to the embodiment;
Fig. 5 is a flowchart exemplifying the operation carried out by an image forming apparatus according to the embodiment;
Fig. 6 is a flowchart exemplifying the operation carried out by an image forming apparatus according to the embodiment; and
Fig. 7 is a flowchart exemplifying the operation carried out by an image forming apparatus according to the embodiment.

### DETAILED DESCRIPTION

In accordance with an embodiment, an image forming apparatus comprises a communication section, an operation input section and a control section. The communication section receives print data from an external device. The operation input section receives a print execution instruction and a print execution reservation instruction. The print execution instruction represents an instruction on the execution of the printing of the print data. The print execution reservation instruction represents an instruction on an reservation of the print execution. The control section starts executing a print operation corresponding to the print execution instruction if no other print jobs are being executed. The control section registers the print execution reservation instruction if another print job is being executed and the number of the print execution reservation instructions subjected to reservation registration is smaller than a given value. The print execution reservation instruction is received by the operation input section (or received according to a print execution reservation instruction from an LAN). If there is a registered print execution reservation instruction subjected to reservation registration after a print job is completed, the control section starts executing a print operation corresponding to the print execution reservation instruction.

An example of the structure of an image forming system of an embodiment is described below with reference to accompanying drawings.

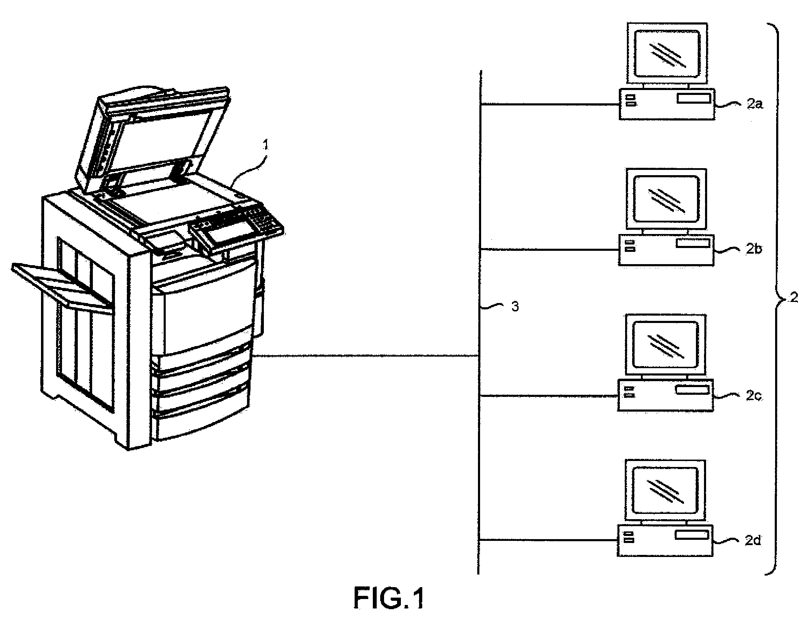

Fig. 1 is a schematic diagram illustrating the structure of an image forming system. The structure shown in Fig. 1 is an example of the structure of the embodiment.

The image forming system comprises an image forming apparatus 1, a plurality of terminal devices 2 (2a, 2b, 2c, 2d...) and an LAN (Local Area Network) 3. The image forming apparatus 1 is, for example, an MFP.

The image forming apparatus 1 has a scanner function, a printer function and a network communication function.

The terminal devices 2 (2a, 2b, 2c, 2d....) are terminal devices used by different users. The terminal device 2 has a communication function of communicating data with the image forming apparatus 1 via the LAN 3. The terminal device 2 may be any device that is capable of communicating with the image forming apparatus 1. For example, the terminal device 2 is a PC (Personal Computer). Further, the terminal device 2 may be a portable terminal. For example, the terminal device 2 configured as a portable terminal is capable of communicating data with the image forming apparatus 1 through wireless communication.

A plurality of applications are installed in the terminal device 2. The terminal device 2 achieves various processing functions via the various installed applications. For example, a printer driver is installed in the terminal device 2. The printer driver is an application for instructing the image forming apparatus 1 to execute a print job. The terminal device 2 is capable of instructing the image forming apparatus 1 to execute a print processing via the printer driver. The terminal device 2 is capable of changing the setting of a print processing via the printer driver.

An example of the structure of the image forming apparatus 1 is described below. The structure of the image forming apparatus 1 is summarized first and then described in detail with reference to accompanying drawings.

The image forming apparatus 1 has a communication section 107 for receiving print data from an external device (the terminal device 2).

The image forming apparatus 1 has an operation input section 112 for receiving a print execution instruction and a print execution reservation instruction. The print execution instruction is an instruction for instructing the image forming apparatus 1 to print the print data. The print execution reservation instruction is an instruction for instructing the image forming apparatus 1 to reserve the print job for future printing.

The image forming apparatus 1 has a control section (system control section 10).

The control section executes a print job corresponding to the print execution instruction. The control section starts the print job when no other print jobs are being executed.

The control section preregisters the print execution reservation instruction received by the operation input section 112. The control section preregisters the print execution reservation instruction in the case where the number of the preregistered print execution reservation instructions is smaller than a given value.

After the execution of a print job is completed, the control section starts executing a print operation corresponding to the print execution reservation instruction received by the operation input section 112. The control section executes a print operation corresponding to a print execution reservation instruction in a case where the print execution reservation instruction subjected to the reservation registration exists.

The detailed structure of the image forming apparatus 1 of the embodiment is described below with reference to accompanying drawings.

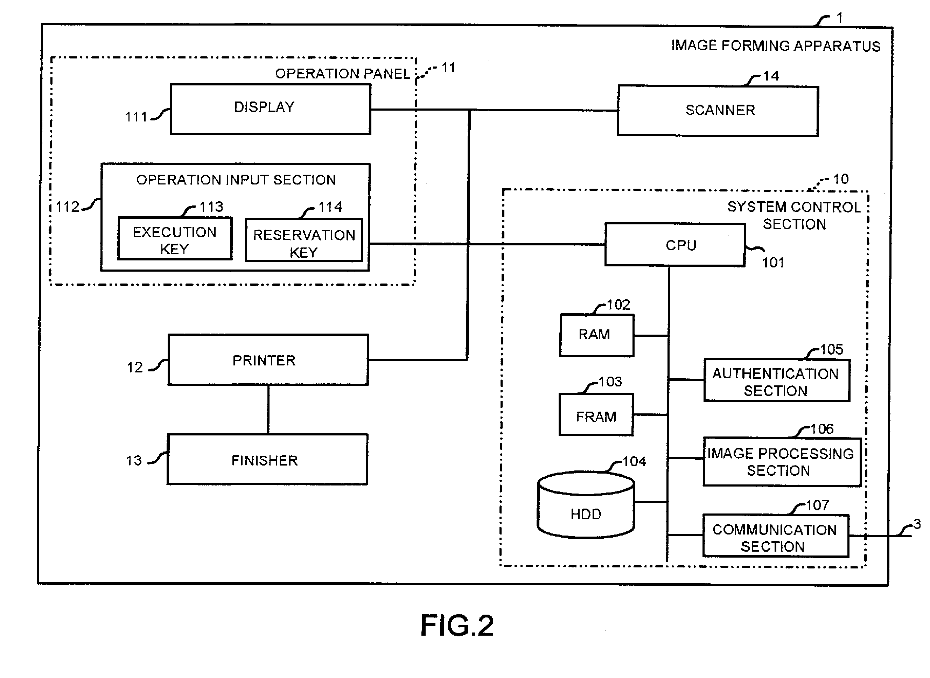

Fig. 2 is a block diagram illustrating the structure of the image forming apparatus 1. The image forming apparatus 1 comprises a system control section 10, an operation panel 11, a printer 12, a finisher 13 and a scanner 14.

The system control section 10 comprises a CPU (Central Processing Unit) 101, a RAM (Random Access read/write Memory) 102, a FRAM (Ferroelectric Random Access Memory) 103, an HDD (Hard Disk Drive) 104, an authentication section 105, an image processing section 106 and a communication section 107.

The operation panel 11 includes a display 111 and an operation input section 112.

The operation input section 112 includes an 'execution' key 113 and a 'reservation' key 114.

The 'execution' key 113 receives a print execution instruction representing the execution of the printing of print data.

The 'reservation' key 114 receives a print execution reservation instruction representing the reservation of the print job for future printing.

The system control section 10 comprehensively controls each section of the image forming apparatus 1. For example, the system control section 10 controls the printer 12 and the scanner 14. The system control section 10 acquires a user instruction from the operation panel 11.

The operation panel 11 is a user interface. For example, the operation panel 11 has the operation input section 112 equipped with various operational keys. For example, the various operational keys consist of the 'execution' key 113 and the 'reservation' key 114. The operation panel 11 is equipped with a display 111 having a built-in touch panel. The operation panel 11 functions as an input section for the user to input an instruction. The operation panel 11 functions as a display section for displaying guidance for the user. Further, the input functions of the 'execution' key 113 and the 'reservation' key 114 of the operation input section 112 may also be realized by the touch panel built in the display 111.

For example, the user inputs a user ID and a password via the touch panel built in the display 111. The system control section 10 authenticates the user according to the input user ID and password. If the authentication is completed, a print data list is displayed on the display 111. Data names (file names) of print data of the authenticated user are listed up on the print data list. The print data of the user refers to the print data sent by the user from the terminal device 2 to the image forming apparatus 1.

The user selects the print data the user desires to print from the print data list. The user can touch, with a finger, the position where the data name of print data is displayed, to select print data. Moreover, the user presses the 'execution' key 113 to instruct the image forming apparatus 1 to execute a print job.

The 'execution' key 113 receives no input when a print job is being executed. That is, the user cannot instruct the image forming apparatus 1 to execute an own print job when the image forming apparatus 1 is executing another print job.

For example, the user presses the 'reservation' key 114 to reserve a print job for future printing. Moreover, the user inputs a user ID and a password via the touch panel built in the display 111. The system control section 10 authenticates the user according to the input user ID and password. If the authentication is completed, a print data list is displayed on the display 111. Data names (file names) of the print data of the authenticated user are listed up on the print data list. The user selects, from the print data list, the print data the user desires to reserve to print. In this way, the image forming apparatus 1 receives the reservation of a print job for future printing.

Further, the 'reservation' key 114 receives no input when no print job is being executed. This is because that the image forming apparatus 1 can immediately enter a print execution state even if no print job is reserved for future printing. Further, the 'reservation' key 114 receives no input when there are a given number of print execution reservations. Further, the given number is '1' in the present embodiment. That is, in the present embodiment, at most one print job can be reserved for future printing. The user cannot instruct the image forming apparatus 1 to reserve an own print job for future printing if another print job is already reserved for future printing.

For example, in the image forming apparatus 1, the execution of the current print job is completed when a print job is being reserved for future printing. Then, the print job reserved for future printing is executed. Moreover, there is no print execution reservation. This is because that at most one print job can be reserved for future printing in the present embodiment. Moreover, in this case, the 'reservation' key 114 enters an instruction reception state so that the user can instruct to execute an own print execution reservation.

The printer 12 is a unit for forming, based on color image data (multi-value image data) or monochrome image data, an image on a sheet. For example, the printer 12 is an electrophotographic type image forming apparatus provided with a sheet storage section, a conveyance mechanism, an exposure device, a photoconductive drum, a developing device, a transfer belt, a transfer device and a fixing device.

Further, not limited to be an electrophotographic type image forming apparatus for forming an image by fixing a toner image on a sheet, the printer 12 may also be an inkjet type image forming apparatus or a thermal transfer type image forming apparatus.

The scanner 14 is a unit for reading the image on a document surface as color image data or monochrome image data. The scanner 14 reads the image on a document surface by optically scanning the document surface. The scanner 14 has a scanning mechanism, a photoelectric conversion section and an ADF (Auto Document Feeder).

Each section of the system control section 10 is described below.

The CPU 101 is a processor for executing an arithmetic processing. The CPU 101 executes a control program stored in the FRAM 103 or HDD 104. The CPU 101 realizes various processing functions by executing the control program.

The RAM 102 (storage section) consisting of a volatile memory functions as a temporary storage area. For example, the RAM 102 is used as a storage area of an executed program and a working area of a program. For example, the RAM 102 is used as the storage area of the image data of the scanner 14 or printer 12.

The FRAM 103 consisting of a rewritable nonvolatile memory stores a control program and control data in charge of the operations of the image forming apparatus 1. Control data and setting information are written into the FRAM 103. The FRAM 103 stores authentication data for user authentication. For example, the authentication data refers to a user ID and a password. Further, the authentication method is not limited to be based on an ID and a password. For example, the authentication method may also be based on an IC card. In this case, the FRAM 103 stores authentication data based on the electronic information stored in an IC card. Alternatively, the authentication method may be based on fingerprints. In this case, the FRAM 103 stores fingerprint-based authentication data.

The HDD 104 is a large-capacity memory for data storage. For example, the HDD 104 stores the print data received from the terminal device 2. The HDD 104 stores a print execution management table for managing the execution of print jobs. The print execution management table is described later in detail.

The authentication section 105 carries out an authentication processing of authenticating a user. The authentication section 105 authenticates the user who inputs a print execution instruction or a print execution reservation instruction. The authentication section 105 authenticates the user according to the authentication data stored in the FRAM 103 and a user ID and a password input from the touch panel of the display 111. Further, in the case where the authentication method of a user is based on an IC card, IC card information may be input from an IC card reader (not shown) instead of the touch panel. In the case where the authentication method of a user is based on fingerprints, fingerprint information is input from a fingerprint reader (not shown) instead of the touch panel.

If the user passes the authentication, then the authentication section 105 notifies the CPU 101 of the user ID of the authenticated user. The CPU 101 controls the operations of each section of the image forming apparatus 1 according to the notified user ID. For example, the CPU 101 displays the print data list of the authenticated user on the display 111.

The image processing section 106 carries out an image processing on the print data received from the terminal device 2 via the LAN 3 and the communication section 107. The image processing section 106 carries out an image processing on the image data read by the scanner 14. The image processing here refers to, for example, a processing of converting the data form of the input image data. For example, the image processing section 106 converts the input image data into image data printable for the printer section 12.

The communication section 107 receives print data from the terminal device 2. The communication section 107 is an LAN interface for the communication with an external device via the LAN 3.

The management on a network print processing carried out in the image forming apparatus 1 is described below.

During the network print processing, the CPU 101 of the image forming apparatus 1 stores print data in the HDD 104. The print data is received from the terminal device 2 via the communication section 107. The CPU 101 manages a print execution processing on the received print data. The CPU 101 manages the print execution processing of the print data stored in the HDD 104 as one print management data. A print execution processing which is called as a private print is included in the print processing managed as print management data. The private print refers to a print execution processing which is executed by the image forming apparatus 1 when a print execution instruction is received from a user. The user directly operates the operation panel 11 of the image forming apparatus 1 to input the print execution instruction.

The moving of the user to the image forming apparatus 1 is a condition for the execution of a private print processing. That is, the system control section 10 of the image forming apparatus 1 manages the execution of a private print until the user directly operates the operation panel 11 to give a print execution instruction. The system control section 10 stores print data in the memory device of the HDD 104 until the execution of the print data is instructed by the user.

During the execution of the private print, the authentication section 105 of the system control section 10 carries out an authentication processing for authenticating a user. The image forming apparatus 1 carries out a print processing if the user passes the authentication.

### (Structure Of Print Execution Management Table)

Next, the print execution management table stored in the RAM 102 is described below.

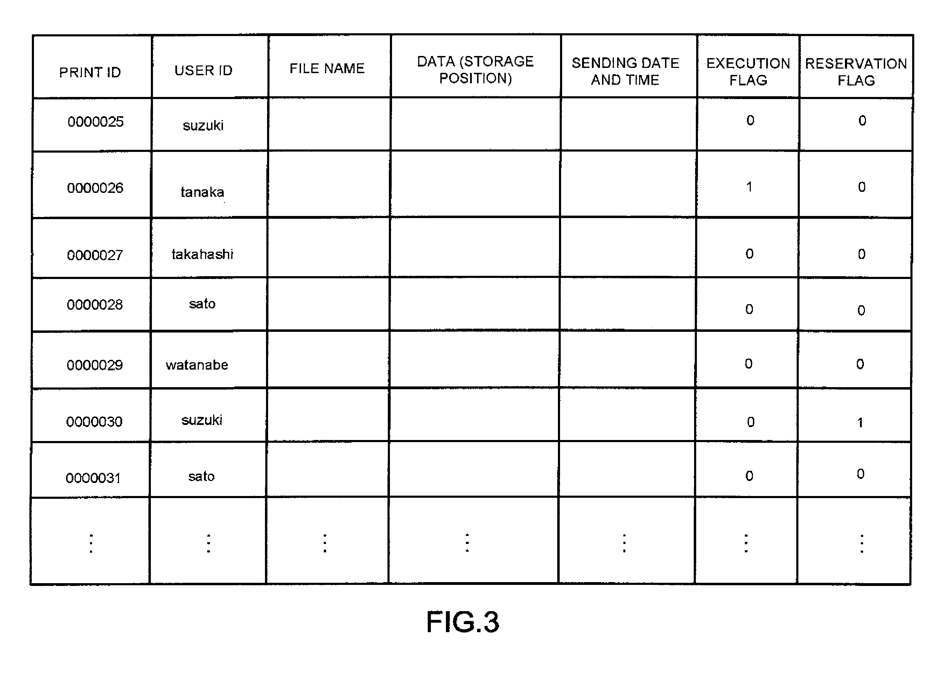

Fig. 3 is a diagram exemplifying the structure of the print execution management table according to the embodiment.

The HDD 104 stores the print execution management table for managing a print execution instruction and a print execution reservation instruction. As shown in Fig. 3, the print execution management table is data in a two-dimensional table form. The print execution management table consists of columns of seven items 'print ID', 'user ID', 'file name', 'data (storage position)', 'sending date and time', 'execution flag' and 'reservation flag'.

Data indicating an Identifier (ID) for uniquely specifying print data is stored in the column of the item 'print ID'. A unique print ID is assigned by the CPU 101.

Data indicating an identifier for uniquely specifying a user is stored in the column of the item 'user ID'.

Data indicating the name of print data named by a user is stored in the column of the item 'file name'.

Data indicating the storage position of print data is stored in the column of the item 'data (storage position)'. For example, the data indicating the storage position of print data is a file path indicating a position in the HDD 104.

Data indicating the date and time when print data is sent from the terminal device 2 to the image forming apparatus 1 is stored in the column of the item 'sending date and time'.

Binary data is stored in the column of the item 'execution flag'. Print data the item 'execution flag' of which is endowed with a value 1' represents print data being executed. On the other hand, print data the item 'execution flag' of which is endowed with a value '0' represents print data not being executed.

Binary data is stored in the column of the item 'reservation flag'. Print data the item 'reservation flag' of which is endowed with a value 1' represents print data subjected to print execution reservation. On the other hand, print data the item 'reservation flag' of which is endowed with a value '0' represents that it is not print data subjected to print execution reservation.

The CPU 101 manages the execution of print jobs by referring to and updating the values of the print execution management table shown in Fig. 3.

Further, the print data list displayed on the display 111 is generated according to the print execution management table shown in Fig. 3.

### (Structure Of Print Data List)

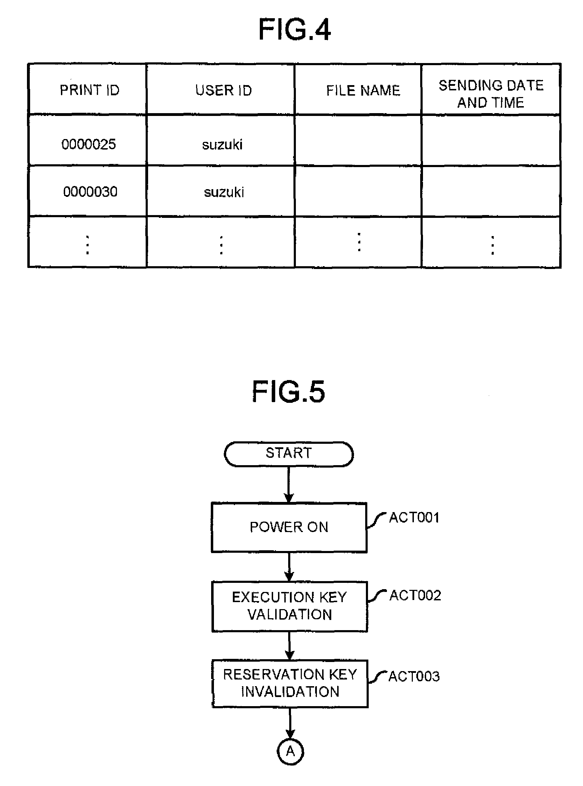

Fig. 4 is a diagram exemplifying the structure of a print data list according to the embodiment.

Fig. 4 shows an example of the print data list of a user whose user ID is 'Suzuki'. That is, when the user uses the image forming apparatus 1, the display 111 displays a print data list like that shown in Fig. 4.

Fig. 4 shows an example of a print data list when the print execution management table is in the state shown in Fig. 3. It can be known from Fig. 3 and Fig. 4 that the data shown in Fig. 4 is a subset of the data shown in Fig. 3. The print data list shown in Fig. 4 is generated according to the print execution management data relating to the user name 'Suzuki' in the print execution management table shown in Fig. 3.

### (Operation Of Image Forming Apparatus 1 According To The Embodiment)

The operations carried out by the image forming apparatus 1 in the embodiment are exemplified below with reference to accompanying drawings.

Fig. 5 is a flowchart exemplifying the operations carried out by the image forming apparatus 1 according to the embodiment. Fig. 5 exemplifies a control operation implemented when the number of print reservations is 1.

First, the image forming apparatus 1 is powered on to be started. The system control section 10 of the image forming apparatus 1 carries out various preparation operations (Act 001). The 'execution' key 113 of the operation input section 112 enters an input reception state. That is, the user can instruct the image forming apparatus 1 to execute a print job (Act 002). The 'reservation' key 114 of the operation input section 112 enters an input rejecting state. That is, the user cannot instruct the image forming apparatus 1 to reserve a print job for future printing (Act 003).

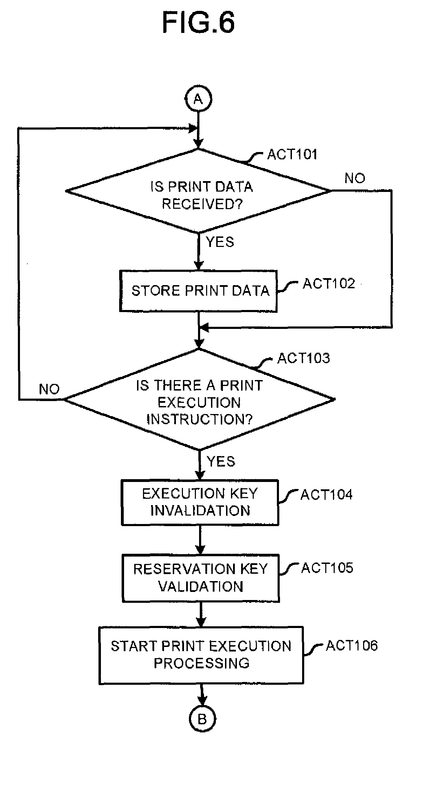

Fig. 6 is a flowchart exemplifying the operations carried out by the image forming apparatus 1 according to the embodiment.

In a case in which the communication section 107 of the image forming apparatus 1 receives print data from the terminal device 2 (Act 101: Yes), the CPU 101 stores the print data in the HDD 104 (Act 102).

In a case in which the 'execution' key 113 is pressed, and the system control section 10 receives a print execution procession instruction from a user (Act 103: Yes), the system control section 10 causes the 'execution' key 113 to enter an input rejection state. That is, the user cannot instruct the image forming apparatus 1 to execute a print job (ACT 104) .

The system control section 10 causes the 'reservation' key 114 to enter an input accepting state. That is, the user can instruct the image forming apparatus 1 to register a print job for future printing (Act 105).

The system control section 10 starts a print execution processing of the print data specified by the user. The image processing section 106 converts the print data stored in the HDD 104 into printable image data. The system control section 10 enables the printer 12 to print the converted image data (Act 106).

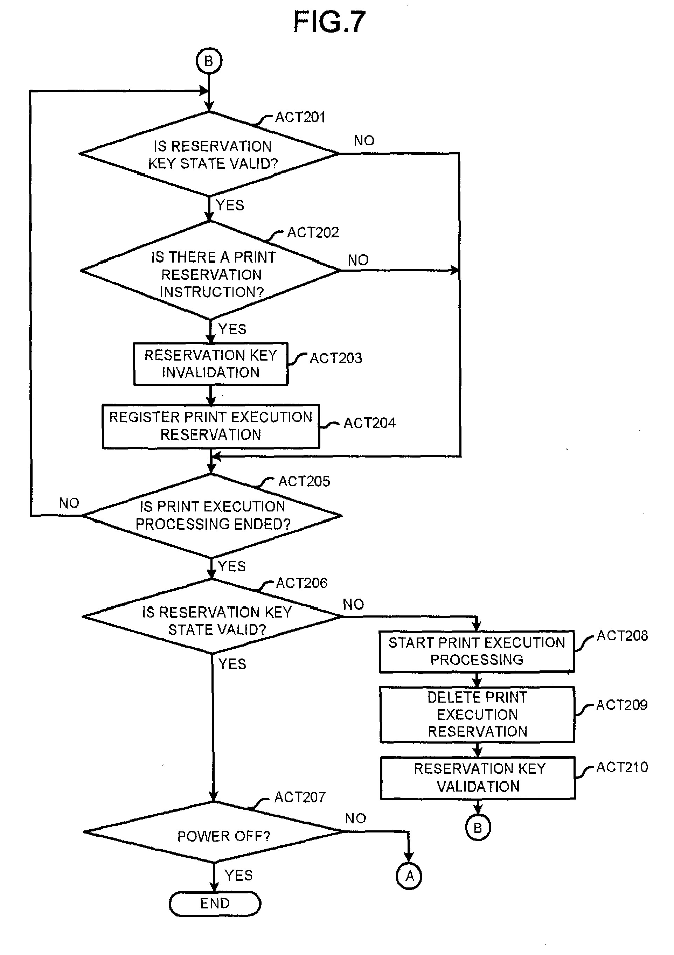

Fig. 7 is a flowchart exemplifying the operations carried out by the image forming apparatus 1 according to the embodiment.

The 'reservation' key 114, if in an input reception state (Act 201: Yes), can be pressed. If the 'reservation' key 114 is pressed and the system control section 10 receives a print execution reservation instruction from a user (Act 202: Yes), then the system control section 10 causes the 'reservation' key 114 to enter an input rejecting state (Act 203). That is, the user cannot instruct the image forming apparatus 1 to reserve a print job for future printing.

The CPU 101 of the system control section 10 writes information indicating the user-instructed print execution reservation in the print execution management table of the HDD 104 (Act 204).

If the 'reservation' key 114 is in an input reception state (Act 206: Yes) when the system control section 10 ends a print execution processing (Act 205: Yes), then no print execution reservation is instructed. If the 'reservation' key 114 is in an input rejection state (Act 206: No) when the system control section 10 ends a print execution processing (Act 205: Yes), then a print execution reservation is instructed. The system control section 10 starts a print execution processing corresponding to the instructed print execution reservation (Act 208). Information indicating the instructed print execution reservation is written into the print execution management table. The CPU 101 of the system control section 10 deletes information indicating the print execution reservation (Act 209). The system control section 10 causes the 'reservation' key 114 to enter an input reception state (Act 210) as there is no instructed print execution reservation. That is, the user can instruct the image forming apparatus 1 to reserve a print job for future printing.

The system control section 10 starts a print execution processing specified by the user. The image processing section 106 converts the print data stored in the HDD 104 into printable image data. The system control section 10 enables the printer 12 to print the converted image data.

The image forming apparatus 1 is powered off if an instruction indicating that the power supply of the image forming apparatus 1 is cut off is input (Act 207: Yes). The image forming apparatus 1 waits for a print execution processing instruction again if no instruction indicating that the power supply of the image forming apparatus 1 is cut off is input (Act 207: No). Then, the processing shown in the present flowchart is ended.

### (Modification)

In the embodiment of the present invention, to reserve a print job for future printing, the user needs to walk towards the image forming apparatus 1 to press the 'reservation' key 114. As a modification, the terminal device 2 sends a print execution reservation instruction to the image forming apparatus 1.

In this case, an application for sending a print execution reservation instruction to the image forming apparatus 1 is installed in the terminal device 2 (2a, 2b, 2c, 2d...). The application of the terminal device 2 communicates data with the image forming apparatus 1 at any time. By means of the application, the operations the user implements on the operation panel 11 can be partially implemented by the user on the terminal device 2 of the user.

First, to be authenticated, the user inputs an ID and a password on the application. After the authentication processing is completed, a print data list of the user is displayed on the terminal device 2. The user selects the print data the user desires to reserve to print from the print data list. Then, the application sends a notice indicating an instruction on the print execution reservation of the selected print data to the image forming apparatus 1.

The communication section 107 of the image forming apparatus 1 receives the notice indicating an instruction on the print execution reservation of the selected print data. Moreover, the CPU 101 of the image forming apparatus 1 confirms whether or not the instruction on the print execution reservation can be accepted. That is, the CPU 101 determines the number of the print execution reservation instructions subjected to reservation registration.

If the result of the confirmation is that the number of the print execution reservation instructions is below a given value, then the instruction on print execution reservation can be received, in this case, the CPU 101 of the image forming apparatus 1 carries out a print execution reservation processing. Moreover, the communication section 107 of the image forming apparatus 1 sends the terminal device 2 a notice indicating that the instruction on print execution reservation is received.

If the result of the determination is that the number of the print execution reservation instructions reaches a given value, then the instruction on the print execution reservation of the selected print data cannot be received, in this case, the communication section 107 of the image forming apparatus 1 sends the terminal device 2 a notice representing that the print execution reservation instruction received from the terminal device 2 cannot be accepted.

As stated above, the image forming apparatus 1 according to the present embodiment can reserve a print job for future printing. By reserving to execute a print job, a user can avoid being cut in line by the other user when waiting for the completion of the print job of another user. Thus, the image forming apparatus 1 according to the present embodiment can shorten the time a user waits to execute a print job.

As in the modification of the embodiment, the waiting time can be shortened further if a print job can be reserved for future printing using the terminal device 2 of the user. This is because that no other users can reserve a print job for future printing during a period when the user walks towards the image forming apparatus 1. Thus, the image forming apparatus 1 according to the modification of the present embodiment can further shorten the time a user waits to execute a print job.

Further, the image forming apparatus 1 of each foregoing embodiment can be partially realized by a computer. In this case, a program for realizing the control function of the computer is recorded in a computer-readable recording medium so that a computer system can read and execute the program recorded in the recording medium to realize the control function of the computer.

Further, the 'computer system' here refers to a computer system built in the image forming apparatus 1, and it is assumed that the 'computer system' includes software such as an OS (Operating System) and hardware such as a peripheral device. The 'computer-readable recording medium' refers to a movable medium such as a flexible disk, a magnetic optical disk, a flash memory, an EEPROM (Electrically Erasable Programmable Read Only Memory), a ROM (Read Only Memory), a RAM (Random Access read/write Memory) and a CD-ROM (Compact Disc-Read Only Memory), a storage device such as a hard disk built in a computer system, or a storage medium consisting of any combination of those mentioned above.

Further, the 'computer-readable recording medium' may further include a medium which dynamically stores a program for a short period of time like a communication line used when a program is sent through a communication network such as an Internet or a telecommunication line such as a telephone line, and a medium which stores a program for a given period of time like a volatile memory inside the computer system serving as a server or client in this case. Further, the program may be used to realize a part of the foregoing functions, or may also be used to realize the foregoing functions by the combination with programs already recorded in a computer system.

The image forming apparatus 1 of the foregoing embodiment may be partially or totally realized as an integrated circuit such as an LSI (Large Scale Integrated). Each function block of the image forming apparatus 1 may be independently formed into a processor, or the function blocks are partially or totally integrated into a processor. Not limited to be realized through LSI, circuit integration may also be realized by a dedicated circuit or a general processor. An integrated circuit is also applicable which bases on a technology which may be developed as a replacement for LSI as semiconductor technology advances.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope and framework of the invention.

## Claims

1. An image forming apparatus, comprising:
a communication section configured to receive print data from an external device;
an operation input section configured to receive a print execution instruction which represents an instruction on the execution of the printing of the print data and a print execution reservation instruction which represents an instruction on the reservation of the print execution; and
a control section configured to start executing a print operation corresponding to the print execution instruction if no print jobs are being executed, preregister the print execution reservation instruction received by the operation input section if a print job is being executed and the number of the print execution reservation instructions subjected to reservation registration is smaller than a given value, and start executing a print operation corresponding to the print execution reservation instruction received by the operation input section in the case of the presence of the print execution reservation instruction subjected to reservation registration after a print job is completed.

2. The image forming apparatus according to claim 1, wherein
the communication section receives the print execution reservation instruction from the external device.

3. The image forming apparatus according to claim 2, wherein
in the case where the number of the print execution reservation instruction subjected to reservation registration reaches the given value when the print execution reservation instruction is received from the external device, the communication section sends the external device a notice indicating that the print execution reservation instruction received from the external device cannot be accepted.

4. The image forming apparatus according to any one of claims 1 to 3, wherein
the operation input section comprises a 'reservation' key for receiving the print execution reservation instruction, wherein the 'reservation' key receives the print execution reservation instruction when the number of the print execution reservation instruction subjected to reservation registration is smaller than the given value.

5. The image forming apparatus according to any one of claims 1 to 4, wherein
the operation input section comprises an 'execution' key for receiving the print execution instruction, wherein the 'execution' key receiving the print execution instruction when the control section is not executing a print job.

6. The image forming apparatus according to any one of claims 1 to 5, further comprising:
an authentication section configured to authenticate a user who inputs the print execution instruction and the print execution reservation instruction.

7. The image forming apparatus according to any one of claims 1 to 6, further comprising:
a storage section configured to store a print execution management table for managing the print execution instruction and the print execution reservation instruction.

8. The image forming apparatus according to any one of claims 1 to 7, wherein
the given number is 1.

9. An image forming method, comprising:
receiving print data from an external device;
receiving a print execution instruction indicating an instruction on the execution of the printing of the print data and a print execution reservation instruction indicating an instruction on reservation of the print execution; and
starting executing the print operation corresponding to the print execution instruction when no print jobs are being executed, registering the print execution reservation instruction received if a print job is being executed and the number of the print execution reservation instructions subjected to reservation registration is smaller than a given value, and starting executing the print operation corresponding to the print execution reservation instruction received in a case of the presence of the print execution reservation instruction subjected to reservation registration after a print job is completed.

10. A non-transient recording medium for storing an image forming program, including
receiving print data from an external device;
receiving a print execution instruction indicating an instruction on the execution of the printing of the print data and a print execution reservation instruction indicating an instruction on reservation of the print execution; and
starting executing the print operation corresponding to the print execution instruction if no print jobs are being executed, registering the print execution reservation instruction received if a print job is being executed and the number of the print execution reservation instructions subjected to reservation registration is smaller than a given value, and starting executing the print operation corresponding to the print execution reservation instruction received in a case of the presence of the print execution reservation instruction subjected to reservation registration after a print job is completed.

11. An image forming system, comprising:
a communication means configured to receive print data from an external device;
an operation input means configured to receive a print execution instruction which represents an instruction on the execution of the printing of the print data and a print execution reservation instruction which represents an instruction on the reservation of the print execution; and
a control means configured to start executing a print operation corresponding to the print execution instruction if no print jobs are being executed, preregister the print execution reservation instruction received by the operation input means if a print job is being executed and the number of the print execution reservation instructions subjected to reservation registration is smaller than a given value, and start executing a print operation corresponding to the print execution reservation instruction received by the operation input means in the case of the presence of the print execution reservation instruction subjected to reservation registration after a print job is completed.
